# EUROPÄISCHE PATENTSCHRIFT

(11) **EP 1 046 925 B1**
(45) Veröffentlichungstag und Bekanntmachung des Hinweises auf die Patenterteilung: **24.10.2007**
(21) Anmeldenummer: 00108119.9
(22) Anmeldetag: 13.04.2000
(51) Int. Cl.: G01S 7/497, G01S 17/02, G01S 17/42

(54) **Optoelektronische Vorrichtung**
Optoelectronic device
Dispositif optoélectronique

(30) Priorität: 17.04.1999 DE 19917509
(43) Veröffentlichungstag der Anmeldung: 25.10.2000
(73) Patentinhaber: Leuze electronic GmbH + Co. KG, 73277 Owen/Teck (DE)
(72) Erfinder: Moll,Georg, 72655 Altdorf (DE); Brunner, Rolf, 73266 Bissingen/Teck (DE)
(74) Vertreter: Ruckh, Rainer Gerhard

(56) Entgegenhaltungen:
- EP-A- 0 520 247
- DE-A- 3 700 009
- DE-A- 3 932 844
- DE-A- 19 525 875
- US-A- 5 444 264

## Beschreibung

Die Erfindung betrifft eine optoelektronische Vorrichtung gemäß dem Oberbegriff des Anspruchs 1.

Eine derartige Vorrichtung ist aus der DE 39 32 844 C2 bekannt. Diese Vorrichtung weist einen nach dem Triangulationsprinzip arbeitenden Distanzsensor mit einem Sendelichtstrahlen emittierenden Sender und einem Empfangslichtstrahlen empfangenden Empfänger auf, der an eine Auswerteeinheit angeschlossen ist. Über eine einen Ablenkspiegel aufweisende Ablenkeinheit werden die Sendelichtstrahlen abgelenkt, so daß diese periodisch einen Überwachungsbereich überstreichen. Die Positionsbestimmung der Objekte erfolgt durch die Ermittlung der aktuellen Winkelstellung der Ablenkeinheit sowie anhand der mittels des Distanzsensors ermittelten Distanzwerte.

Die Abmessungen des Überwachungsbereichs sind in Form oder Berandungskontur des Überwachungsbereichs als Folge von Paaren von Distanz- und Winkelwerten in der Auswerteeinheit abgespeichert.

Zur Erfassung eines Objekts wird dessen Position erfaßt, in dem die zugehörigen Distanz- und Winkelwerte registriert werden. Diese Distanz- und Winkelwerte werden mit der abgespeicherten Berandungskontur des Überwachungsbereichs verglichen. Ergibt sich dabei, daß sich das Objekt innerhalb des Überwachungsbereichs befindet, so wird eine Signalabgabe ausgelöst.

Nachteilig hierbei ist, daß in der Auswerteeinheit nur ein Überwachungsbereich abgespeichert ist. In der Praxis treten jedoch häufig verschiedene Anwendungsfälle auf, bei welchen mittels der optoelektronischen Vorrichtung eine Erfassung von Objekten innerhalb verschiedener Überwachungsbereiche mit unterschiedlichen Abmessungen notwendig wird. Ist beispielsweise eine optoelektronische Vorrichtung an der Frontseite eines fahrerlosen Transportfahrzeugs montiert, um das Vorfeld des Fahrzeugs zu überwachen, so kann die Dimensionierung des Überwachungsbereichs davon abhängig sein, ob sich das Fahrzeug in einem Gang entlang einer vorgegebenen Bahn oder in einer Halle frei bewegt.

Bei derartigen Applikationen wird die optoelektronische Vorrichtung insbesondere im Bereich des Personenschutzes eingesetzt, so daß die optoelektronische Vorrichtung sicherheitstechnischen Maßstäben genügen muß. Dabei ist eine wesentliche Voraussetzung, daß bei einer Auswahl von geeigneten Überwachungsbereichen eine entsprechend hohe Fehlersicherheit gewährleistet ist.

Die DE 37 00 009 A1 betrifft eine optoelektronische Schutzzonenvorrichtung zur Sicherung von bewegten oder festen Objekten vor unsachgemäßer Berührung oder Kollision. Durch einen optoelektronischen Abstandssensor, der in einem einstellbaren Winkelbereich geschwenkt wird, werden Objekte mit ihrem Abstand und ihrer Winkelposition erkannt. Die Abstandmessung wird durch einen gerichteten optoelektronischen Abstandssensor ausgeführt, der innerhalb eines festen Rotations-Winkels bezogen auf die zur Bildrichtung senkrechte Achse (A) sich mit festen Winkelschritten bewegt und pro Winkelschritt einen vom Abstand des Objekts abhängigen Messwert abgibt. Programmierbare Sicherheitslinien können als Einzel-Messwerte pro Winkelschritt in elektronischen Speicherzellen gespeichert werden. Diese werden mit den Objektpositionen verglichen. Bei Unterschreiten der durch die programmierbaren Sicherheitslinien bestimmten Abstände erfolgt eine Signalabgabe.

Die EP 0 520 247 A2 betrifft eine einen Sender, einen Empfänger und eine Schaltungsanordnung zur Signalauswertung aufweisende Überwachungseinrichtung für das berührungslose Erfassen von im zu überwachenden Bereich befindlichen Objekten. Der Sender und Empfänger sind auf derselben Seite angeordnet, der zu überwachende Bereich ist durch eine Referenzfläche begrenzt. Der Pegel der von der Referenzfläche reflektierten Sendesignale wird mit dem Pegel der momentanen Empfangssignale verglichen. Bei im Überwachungsbereich befindlichem Objekt erfolgt eine Warnsignalabgabe.

Der Erfindung liegt die Aufgabe zugrunde, bei einer optoelektronischen Vorrichtung der eingangs genannten Art eine fehlersichere Auswahl von verschiedenen Überwachungsbereichen zu schaffen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Erfindungsgemäß sind in der Auswerteeinheit der optoelektronischen Vorrichtung die Abmessungen verschiedener Überwachungsbereiche abgespeichert. Zur Auswahl eines oder mehrerer dieser Überwachungsbereiche sind mehrere Schalter über jeweils eine Zuleitung an einem Eingang der Auswerteeinheit angeschlossen, wobei jedem Eingang ein abgespeicherter Überwachungsbereich zugeordnet ist. Durch Betätigen eines Schalters steht am zugeordneten Eingang ein vorgegebener Signalwert an, welcher einer Aktivierung dieses Eingangs entspricht. Durch die Aktivierung des Eingangs wird auch der dem Eingang zugeordnete Überwachungsbereich aktiviert, wodurch die Objekte in diesem Überwachungsbereich erfaßt werden. Zu Testzwecken wird über einen Ausgang der Auswerteeinheit auf die Zuleitungen jeweils ein Signalwert ausgegeben, welcher im fehlerfreien Fall an dem entsprechenden Eingang der Auswerteeinheit ansteht.

Ein wesentlicher Vorteil der erfindungsgemäßen Vorrichtung besteht darin, daß über einen einzelnen Eingang der Auswerteeinheit eine fehlersichere Auswahl eines bestimmten Überwachungsbereichs erfolgen kann. Die Fehlersicherheit wird dabei durch die Ausgabe der Signalwerte am Ausgang der Auswerteeinheit gewährleistet, welche über die Eingänge der Auswerteeinheit in diese rückgelesen und überprüft werden. Dies bedeutet eine erhebliche Reduzierung des Schaltungsaufwands gegenüber herkömmlichen fehlersicheren Schaltungsanordnungen, bei welchen die Eingänge üblicherweise redundant ausgelegt werden müssen.

Ein weiterer Vorteil der erfindungsgemäßen optoelektronischen Vorrichtung besteht darin, daß zur Auswahl der einzelnen Überwachungsbereiche nahezu beliebige Schalter einsetzbar sind. Insbesondere können diese Schalter als Relais und als Ausgänge von Steuerungen, wie zum Beispiel SPS Steuerungen, ausgebildet sein. Über derartige Steuerungen kann dabei zentral die Auswahl der Überwachungsbereiche erfolgen. Desweiteren können die Schalter auch als binäre Sensoren ausgebildet sein, welche beispielsweise von Lichtschranken oder Näherungsschaltern gebildet sind. Diese Sensoren können sich beispielsweise an Maschinen befinden, und zur Ermittlung der aktuellen Position eines an der Maschine verfahrbaren Bearbeitungszentrums dienen. Die optoelektronische Vorrichtung ist dann so an der Maschine angebracht, daß mit dieser das Vorfeld der Maschine überwacht wird. Je nach Position des Bearbeitungszentrums an der Maschine wird einer der Schalter betätigt, worauf in der optoelektronischen Vorrichtung ein geeigneter Überwachungsbereich ausgewählt wird.

Besonders vorteilhaft erfolgt das Umschalten zwischen zwei Überwachungsbereichen derart, daß bei einem ersten betätigten Schalter zunächst ein zweiter Schalter betätigt wird, so daß für eine Übergangszeit Objekte in zwei verschiedenen Überwachungsbereichen erfaßt werden. Erst dann erfolgt das Rücksetzen des ersten Schalters, so daß nur der Überwachungsbereich, der mit dem zweiten Schalter ausgewählt wurde, noch aktiv ist. Auf diese Weise entsteht beim Wechsel zwischen zwei Überwachungsbereichen keine zeitliche Lücke, in welcher kein Überwachungsbereich aktiviert ist. In einer derartigen Lücke könnte mit der optoelektronischen Vorrichtung kein Objekt erfaßt werden, was zu einem Sicherheitsrisiko für Personen im Umfeld der Maschine führen würde.

Die Erfindung wird im nachstehenden anhand der Zeichnungen erläutert. Es zeigen:
- Figur 1:: Schematische Darstellung eines Ausführungsbeispiels der optoelektronischen Vorrichtung.
- Figur 2:: Schematische Darstellung eines mittels der optoelektronischen Vorrichtung gemäß Figur 1 überwachten Überwachungsbereichs.
- Figur 3:: Anordnung einer optoelektronischen Vorrichtung an einer auf einer Schiene verfahrbaren Maschine
a) in einer ersten Endposition der Maschine bei einem ersten von der optoelektronischen Vorrichtung überwachten Überwachungsbereich,
b) während der Fahrt der Maschine von der ersten zur zweiten Endposition bei einem zweiten von der optoelektronischen Vorrichtung überwachten Überwachungsbereich,
c) in einer zweiten Endposition der Maschine bei einem dritten von der optoelektronischen Vorrichtung überwachten Überwachungsbereich,
d) während der Fahrt der Maschine von der zweiten zur ersten Endposition bei einem vierten von der optoelektronischen Vorrichtung überwachten Überwachungsbereich.

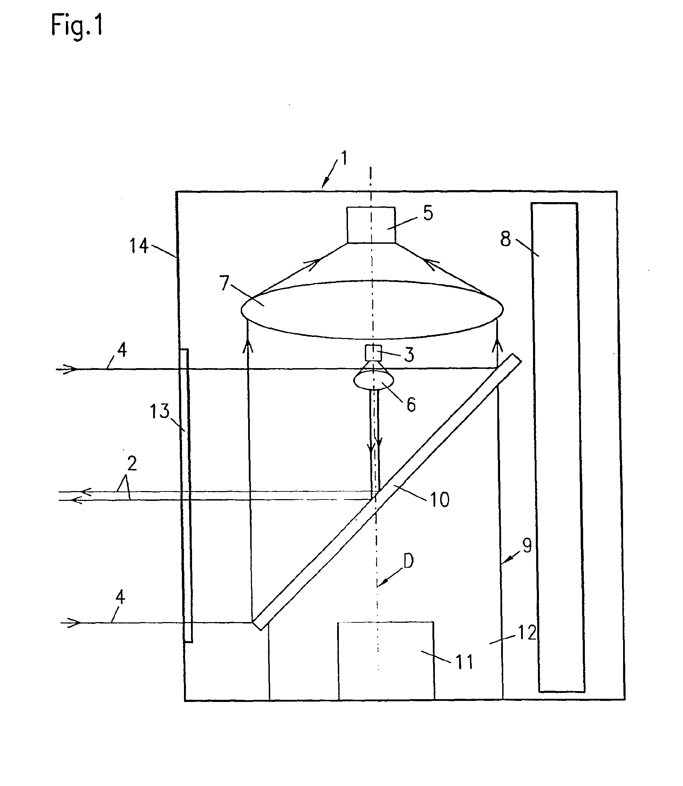

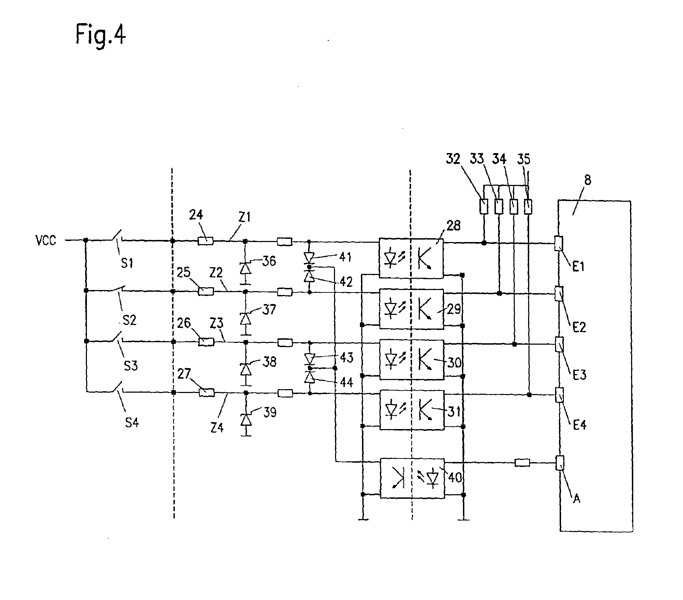

- Figur 4:: Anschlußschema für den Anschluß mehrerer Schalter an die Auswerteeinheit der optoelektronischen Vorrichtung gemäß Figur 1.

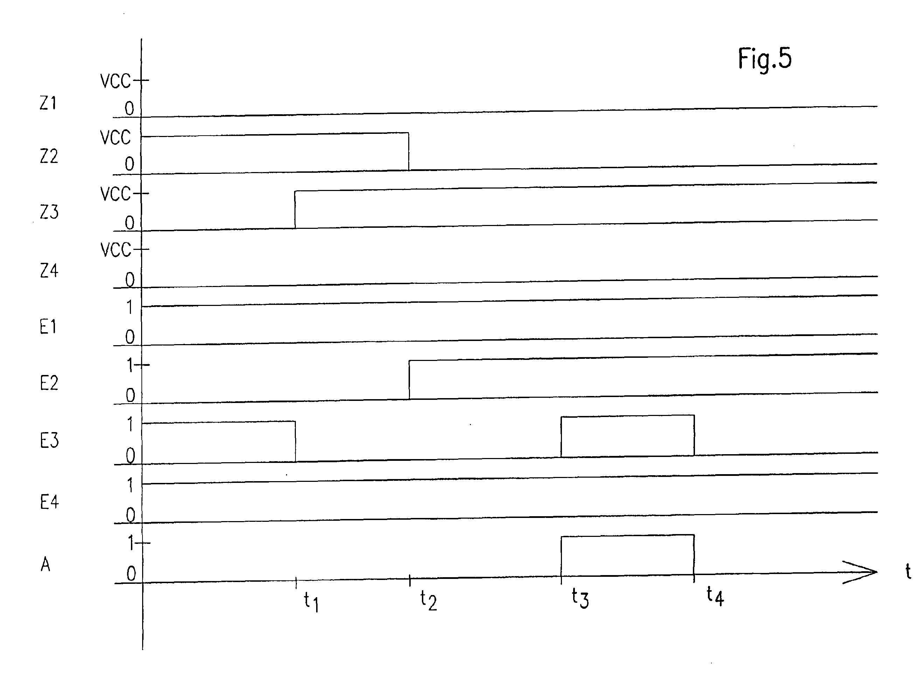

- Figur 5:: Impulsdiagramm für das Anschlußschema gemäß Figur 4.

Figur 1 zeigt ein Ausführungsbeispiel einer optoelektronischen Vorrichtung 1 zum Erfassen von Objekten. Die optoelektronische Vorrichtung 1 weist einen Distanzsensor mit einem Sendelichtstrahlen 2 emittierenden Sender 3 und einen Empfangslichtstrahlen 4 empfangenden Empfänger 5 auf. Der Sender 3 besteht vorzugsweise aus einer Laserdiode, welcher zur Strahlformung der Sendelichtstrahlen 2 eine Sendeoptik 6 nachgeordnet ist. Der Empfänger 5 ist beispielsweise von einer pin-Photodiode gebildet, welcher eine Empfangsoptik 7 vorgeordnet ist.

Die Distanzmessung kann zum einen nach dem Prinzip der Phasenmessung erfolgen. In diesem Fall wird die Laserdiode im CW-Betrieb betrieben, wobei den Sendelichtstrahlen 2 eine Amplitudenmodulation aufgeprägt ist. Empfangsseitig wird die Distanzinformation durch einen Vergleich der Phasenlagen der emittierten Sendelichtstrahlen 2 und der von einem Objekt zurückreflektierten und auf den Empfänger 5 auftreffenden Empfangslichtstrahlen 4 ermittelt.

Diese Auswertung erfolgt in einer Auswerteeinheit 8, an welche der Sender 3 und der Empfänger 5 über nicht dargestellte Zuleitungen angeschlossen sind. Die Auswerteeinheit 8 ist im vorliegenden Ausführungsbeispiel von einem Microcontroller gebildet.

Alternativ kann die Distanzmessung auch nach der Impulslaufzeitmethode erfolgen. In diesem Fall werden vom Sender 3 kurze Sendelichtimpulse emittiert. Die Distanzinformation wird in diesem Fall durch direkte Messung der Laufzeit eines Sendelichtimpulses zu einem Objekt und zurück zum Empfänger 5 gewonnen.

Die Sende- 2 und Empfangslichtstrahlen 4 sind über eine Ablenkeinheit 9 geführt. Die Ablenkeinheit 9 weist einen Ablenkspiegel 10 auf, welcher auf einem drehbaren, über einen Motor 11 angetriebenen Sockel 12 aufsitzt. Der Ablenkspiegel 10 rotiert dadurch mit einer vorgegebenen Drehzahl um eine vertikale Drehachse D. Der Sender 3 und der Empfänger 5 sind in der Drehachse D oberhalb des Ablenkspiegels 10 angeordnet.

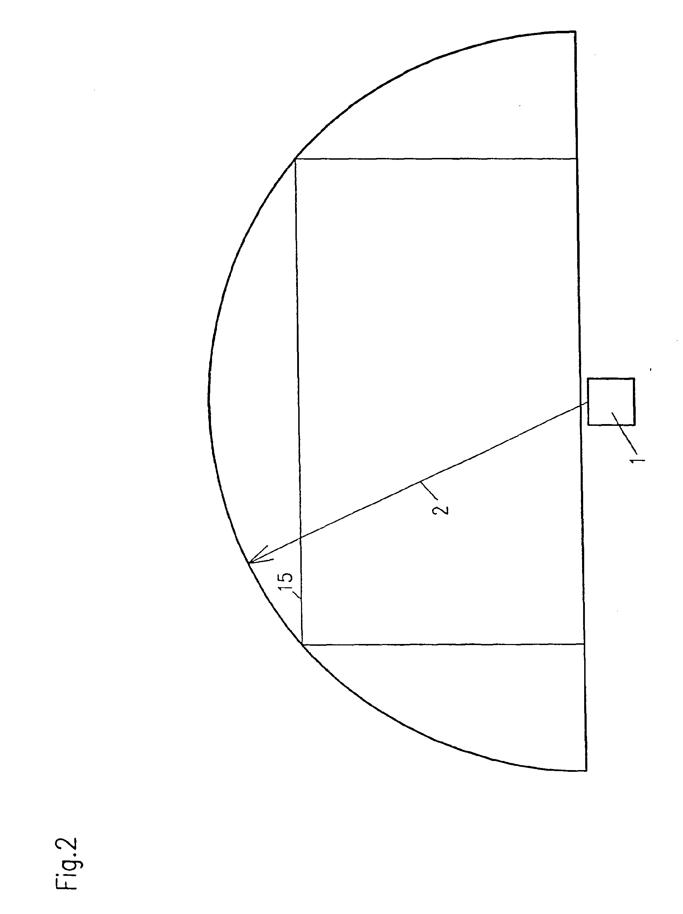

Der Ablenkspiegel 10 ist um 45° gegenüber der Drehachse D geneigt, so daß die am Ablenkspiegel 10 reflektierten Sendelichtstrahlen 2 in horizontaler Richtung verlaufend aus der Vorrichtung 1 geführt sind. Dabei durchdringen die Sendelichtstrahlen 2 ein Austrittsfenster 13, welches in der Frontwand des Gehäuses 14 der Vorrichtung 1 angeordnet ist. Das Gehäuse 14 ist im wesentlichen zylindrisch ausgebildet, wobei sich das Austrittsfenster 13 über einen Winkelbereich von 180° erstreckt. Dementsprechend wird, wie insbesondere aus Figur 2 ersichtlich ist, mit den Sendelichtstrahlen 2 eine halbkreisförmige ebene Fläche abgetastet, in welcher Objekte detektierbar sind. Die von den Objekten zurückreflektierten Empfangslichtstrahlen 4 durchsetzen in horizontaler Richtung verlaufend das Austrittsfenster 13 und werden über den Ablenkspiegel 10 zum Empfänger 5 geführt.

Zur Erfassung der Position der Objekte wird mittels eines nicht dargestellten, an die Auswerteeinheit 8 angeschlossenen Winkelgebers fortlaufend die aktuelle Winkelposition der Ablenkeinheit 9 erfaßt. Aus der Winkelposition und dem in dieser Winkelposition registrierten Distanzwert wird in der Auswerteeinheit 8 die Position eines Objektes bestimmt.

Derartige optoelektronische Vorrichtungen 1 werden insbesondere auch im Bereich des Personenschutzes eingesetzt, wobei zur Erfüllung der sicherheitstechnischen Anforderungen die Auswerteeinheit 8 einen redundanten Aufbau aufweist.

Bei derartigen sicherheitstechnischen Anwendungen erfolgt typischerweise die Erfassung von Objekten und Personen nicht innerhalb der gesamten von den Sendelichtstrahlen 2 überstrichenen Fläche, sondern innerhalb eines begrenzten Überwachungsbereichs 15. Ein Beispiel für einen derartigen Überwachungsbereich 15 ist in Figur 2 dargestellt. In diesem Fall ist der Überwachungsbereich 15 von einer rechteckigen ebenen Fläche gebildet. Sobald ein Objekt oder eine Person in diesen Überwachungsbereich 15 eindringt, erfolgt eine Objektmeldung. Diese Objektmeldung kann beispielsweise zum Abschalten einer Maschine, deren Vorfeld mit der optoelektronischen Vorrichtung 1 überwacht wird, verwendet werden.

Die Abmessungen des Überwachungsbereichs 15 sind in der Auswerteeinheit 8 als Parametersatz abgespeichert. Die von der Vorrichtung 1 von einem Objekt registrierten Positionswerte werden in der Auswerteeinheit 8 mit dem abgespeicherten Überwachungsbereich 15 verglichen. Anhand dieses Vergleichs wird beurteilt, ob das Objekt in den Überwachungsbereich 15 eingedrungen ist. Falls dies der Fall ist, wird die Objektmeldung ausgegeben.

In vielen sicherheitstechnischen Applikationen kann es notwendig sein, Objekte zu verschiedenen Zeiten in unterschiedlich gestalteten Überwachungsbereichen 15 zu erfassen.

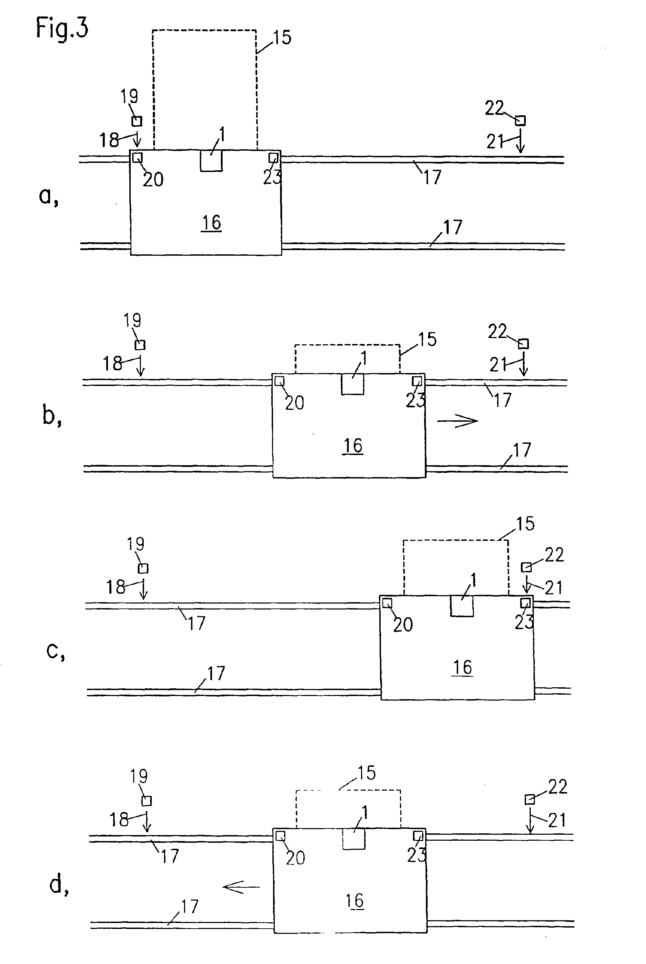

Ein derartiges Applikationsbeispiel ist in den Figuren 3 a - d dargestellt. In diesem Fall ist die optoelektronische Vorrichtung 1 an einer Frontseite einer Maschine 16 angebracht, welche auf Schienen 17 verfahrbar gelagert ist. Die Maschine 16 kann von einer Werkzeugmaschine, einer Abkantpresse oder dergleichen gebildet sein, wobei deren Vorfeld zu Sicherheitszwecken mittels der optoelektronischen Vorrichtung 1 überwacht wird. Wie in den Figuren 3a - d dargestellt, hängt die Dimensionierung des Überwachungsbereichs 15 von der Position der Maschine 16 auf den Schienen 17 ab.

Bei dem in Figur 3a dargestellten Fall befindet sich die Maschine 16 in einer ersten Endposition. In dieser Endposition treffen Sendelichtstrahlen 18 eines Senders 19 einer ersten Lichtschranke auf den zugeordneten Empfänger 20 dieser Lichtschranke. Diese Lichtschranke bildet somit einen Endschalter zur Erkennung der ersten Endposition der Maschine 16. Der Empfänger 20 der Lichtschranke ist dabei an einem Ende der Maschine 16 angeordnet, während der Sender 19 stationär vor der Maschine 16 angeordnet ist. In dieser Position der Maschine 16 müssen die Objekte innerhalb eines ersten, in Figur 3a dargestellten Überwachungsbereichs 15 von der optoelektronischen Vorrichtung 1 erfaßt werden.

Der Empfänger 20 der Lichtschranke ist dabei an eine nicht dargestellte Steuerung in der Maschine 16 angeschlossen, welche die Bewegung der Maschine 16 längs der Schienen 17 steuert. An diese Steuerung ist zudem auch die optoelektronische Vorrichtung 1 angeschlossen.

Bei der in Figur 3b dargestellten Anordnung bewegt sich die Maschine 16 auf den Schienen 17 von der ersten Endposition in Richtung einer zweiten Endposition, wobei dabei die Maschine 16 von der Steuerung gesteuert wird. Während dieser Bewegung der Maschine 16 sind mittels der optoelektronischen Vorrichtung 1 Objekte in dem in Figur 3b dargestellten zweiten Überwachungsbereich 15 zu erfassen.

Bei der Anordnung gemäß Figur 3c befindet sich die Maschine 16 in einer zweiten Endposition, welche mittels einer zweiten Lichtschranke überwacht wird. Dabei befindet sich wiederum der Sendelichtstrahlen 21 emittierende Sender 22 der Lichtschranke stationär vor der Maschine 16, während der Empfänger 23 an der Maschine 16 angeordnet ist, so daß in der zweiten Endposition der Maschine 16 die vom Sender 22 emittierten Sendelichtstrahlen 21 auf den Empfänger 23 treffen. Bei dieser Anordnung müssen mittels der optoelektronischen Vorrichtung 1 Objekte innerhalb des dritten in Figur 3c dargestellten Überwachungsbereichs 15 erfaßt werden.

Schließlich bewegt sich die Maschine 16 wie in Figur 3d dargestellt auf den Schienen 17 von der zweiten in Richtung der ersten Endposition. Während dieser Bewegung müssen Objekte innerhalb des in Figur 3d dargestellten Überwachungsbereichs 15 erkannt werden.

Erfindungsgemäß sind die Abmessungen sämtlicher in Figur 3a - d dargestellten Überwachungsbereiche 15 in der optoelektronischen Vorrichtung 1 abgespeichert. Dabei kann durch einen Umschaltvorgang ein Überwachungsbereich 15 aktiviert werden, so daß mittels der optoelektronischen Vorrichtung 1 die Objekte in diesem Überwachungsbereich 15 erfaßt werden. Das Umschalten zwischen verschiedenen Überwachungsbereichen 15 erfolgt dabei mittels Schaltern S1 - S4.

Figur 4 zeigt ein Ausführungsbeispiel des Anschlußschemas für den Anschluß der Schalter S1 - S4 an die Auswerteeinheit 8 der optoelektronischen Vorrichtung 1. Bei diesem Ausführungsbeispiel sind insgesamt vier Schalter S1 - S4 jeweils an einen Eingang E1 - E4 der als Microcontroller ausgebildeten Auswerteeinheit 8 angeschlossen. Jedem Eingang E1 - E4 ist ein abgespeicherter Überwachungsbereich 15 zugeordnet, so daß insgesamt ein Umschalten zwischen vier unterschiedlichen Überwachungsbereichen 15 möglich ist. Prinzipiell können auch weniger oder mehrere Schalter S1 - SN jeweils an einen Eingang E1 - EN der Auswerteeinheit 8 angeschlossen sein, wodurch insgesamt eine Anzahl N von Überwachungsbereichen 15 auswählbar ist.

Die Schalter S1 - S4 können von Relais, Ausgängen von Steuerungen oder auch von binären Sensoren, wie zum Beispiel Lichtschranken oder Näherungsschaltern gebildet sein. Im vorliegenden Ausführungsbeispiel sind zwei der Schalter S1, S3 gemäß Figur 4 von den Lichtschranken an der Maschine 16 gemäß Figur 3 gebildet.

Die beiden anderen Schalter S2, S4 sind jeweils von einem Ausgang der Steuerung der Maschine 16 gebildet.

Jeder der Schalter S1 - S4 ist über eine Zuleitung Z1 - Z4 an einen Eingang E1 - E4 der Auswerteeinheit 8 angeschlossen, wobei in jeder Zuleitung Z1 - Z4 jeweils ein Widerstand 24, 25, 26, 27 und ein Optokoppler 28, 29, 30, 31 hintereinander geschaltet sind. Durch die Optokoppler 28 - 31 sind die Eingänge E1 - E4 der Auswerteeinheit 8 von den Schaltern S1 - S4 galvanisch getrennt. Zwischen den Optokopplern 28 - 31 und den Eingängen E1 - E4 der Auswerteeinheit 8 ist zudem eine Anordnung von weiteren Widerständen 32, 33, 34, 35 geschaltet. Zudem sind an die Zuleitungen Z1 - Z4 Supressor-Dioden 36, 37, 38, 39 zum Schutz gegen transiente Überspannungen angeschlossen. Schließlich ist ein Ausgang A der Auswerteeinheit 8 über einen weiteren Optokoppler 40 und eine Anordnung von Dioden 41, 42, 43, 44 an die Zuleitungen Z1 - Z4 angeschlossen. Durch diese Beschaltung wird erreicht, daß ein Signal am Ausgang A der Auswerteeinheit 8 gleichzeitig auf alle Zuleitungen Z1 - Z4 zwischen den Schaltern S1 - S4 und den Eingängen E1 - E4 der Auswerteeinheit 8 ausgebbar ist.

Die Auswahl eines bestimmten Überwachungsbereichs 15 erfolgt durch Betätigen des entsprechenden Schalters S1, S2, S3 oder S4. Durch das Betätigen des Schalters S1, S2, S3 oder S4 liegt auf der entsprechenden Zuleitung Z1, Z2, Z3 oder Z4 eine Versorgungsspannung VCC an. Durch die Schutzbeschaltung mit den Supressor-Dioden 36 - 39 kann die Versorgungsspannung VCC in einem weiten Bereich, typischerweise zwischen 16 und 30 Volt variieren, wobei trotzdem ein konstanter Strom durch den nachgeordneten Optokoppler 28, 29, 30 oder 31 fließt.

Durch diesen Strom wird der entsprechende Eingang E1, E2, E3 oder E4 in der Auswerteeinheit 8 aktiviert. Im vorliegenden Ausführungsbeispiel kann der Eingang E1 - E4 zwei Signalwerte "0" und "1" annehmen, wobei bei einem aktivierten Eingang E1, E2, E2 oder E4 der Signalwert "0" ansteht..

Bei einem geöffneten Schalter S1, S2, S3 oder S4 liegt auf der entsprechenden Zuleitung Z1, Z2, Z3 oder Z4 der Spannungswert "0" an, so daß der zugehörige Eingang E1, E2, E3 oder E4 deaktiviert ist und den Signalwert "1" annimmt.

Über den Ausgang A der Auswerteeinheit 8 kann die Schaltungsanordnung zum Anschluß der Schalter S1 - S4 an die Auswerteeinheit 8 getestet werden, wobei die Testung vorzugsweise zyklisch erfolgt. Hierzu wird von der Auswerteeinheit 8 über den Ausgang A auf die Zuleitungen Z1 - Z4 jeweils ein bestimmter Signalwert ausgegeben, welcher über die Eingänge E1 - E4 in die Auswerteeinheit 8 rückgelesen wird. Ein fehlerfreier Betrieb liegt dabei dann vor, wenn die über den Ausgang A auf die Zuleitungen Z1 - Z4 ausgelesenen Signalwerte an den entsprechenden Eingängen E1 - E4 wieder empfangen werden. Durch diese Testung werden die sicherheitstechnischen Anforderungen, die für den Einsatz der optoelektronischen Vorrichtung 1 im Bereich des Personenschutzes vorausgesetzt werden, erfüllt. Besonders vorteilhaft ist bei der erfindungsgemäßen Schaltungsanordnung, daß die Zuleitungen Z1 - Z4 zwischen einem Schalter S1 - S4 und der Auswerteeinheit 8 nicht redundant ausgelegt sein müssen, um die sicherheitstechnischen Anforderungen zu erfüllen.

Die Funktionsweise der Schaltungsanordnung gemäß Figur 4 ist in dem Impulsdiagramm gemäß Figur 5 veranschaulicht. Bis zum Zeitpunkt t₁ ist lediglich der Schalter S2 betätigt, so daß auf der Zuleitung Z2 die Versorgungsspannung VCC anliegt. Die anderen Schalter S1, S3, S4 sind nicht betätigt, so daß auf den Zuleitungen Z1, Z3, Z4 jeweils der Spannungswert 0 anliegt. Dementsprechend ist nur der Eingang E2 der Auswerteeinheit 8 aktiviert, so daß dort der Signalwert 0 ansteht. An den anderen Eingängen E1, E3, E4 steht jeweils der Signalwert 1 an, so daß diese deaktiviert sind. Daher ist bis zu dem Zeitpunkt t₁ durch die Aktivierung des zweiten Eingangs E2 nur der zweite Überwachungsbereich 15 aktiviert, so daß mit der optoelektronischen Vorrichtung 1 Objekte in diesem Überwachungsbereich 15 erfaßt werden.

Dieser Fall entspricht beispielsweise der in Figur 3b dargestellten Anordnung der Maschine 16. Die Maschine 16 bewegt sich zwischen der ersten und der zweiten Endposition, so daß die Lichtwege der beiden Lichtschranken, welche die Schalter S 1 und S3 bilden, unterbrochen und demzufolge nicht betätigt sind. Während der Fahrt zur zweiten Endposition der Maschine 16 ist lediglich ein Ausgang der Steuerung, welche den Schalter S2 bildet, betätigt. Der weitere, den Schalter S4 bildende Ausgang für die Fahrt der Maschine 16 in umgekehrter Richtung ist in diesem Fall ebenfalls nicht betätigt.

Zwischen den Zeitpunkten t₁ und t₂ wird eine Umschaltung des Überwachungsbereichs 15 eingeleitet, indem zusätzlich zum Schalter S2 der Schalter S3 betätigt ist, wodurch auch auf der Zuleitung Z3 die Versorgungsspannung VCC anliegt. Dementsprechend stehen an den Eingängen E2 und E3 gleichzeitig die Signalwerte 0 an, so daß in der Auswerteeinheit 8 gleichzeitig der zweite und der dritte Überwachungsbereich 15 aktiviert sind, so daß mit der optoelektronischen Vorrichtung 1 Objekte gleichzeitig im zweiten und dritten Überwachungsbereich 15 erfaßt werden.

Dieser Fall entspricht dem Einfahren der Maschine 16 in die zweite Endposition die in Figur 3c dargestellt ist. In dem Zeitbereich zwischen t₁ und t₂ ist der den Schalter S2 bildende Ausgang der Steuerung noch aktiviert, wobei jedoch bereits die Sendelichtstrahlen 21 des Sender 22 der zweiten Lichtschranke auf den zugeordneten Empfänger 23 treffen, so daß auch bereits der Schalter S3 betätigt ist.

Für Zeiten größer als t₂ ist die Maschine 16 angehalten, der den Schalter S2 bildende Ausgang der Steuerung ist somit nicht mehr betätigt, während wie in Figur 3c dargestellt der von der zweiten Lichtschranke gebildete Schalter S3 betätigt ist. Das Verfahren der Maschine 16 in die zweite Endposition ist damit abgeschlossen. Entsprechend wird der Eingang E2 deaktiviert, so daß dort der Signalwert 1 ansteht, wogegen der Eingang E3 aktiviert bleibt. Damit ist der Umschaltvorgang zwischen dem zweiten und dritten Überwachungsbereich 15 abgeschlossen, so daß Objekte nur noch im dritten Überwachungsbereich 15 wie in Figur 3c dargestellt erfaßt werden.

Die erfindungsgemäße Umschaltung zwischen den beiden Überwachungsbereichen 15 weist den Vorteil auf, daß während des Umschaltvorgangs keine zeitliche Lücke entsteht, in welcher kein Überwachungsbereich 15 aktiviert ist. Wenn nämlich kein Überwachungsbereich 15 aktiviert ist, so entspricht dies einer Vorgabe eines Überwachungsbereichs 15 mit der Fläche null, so daß mit der optoelektronischen Vorrichtung 1 keine Objekte mehr erfaßbar sind. Dies könnte dazu führen, daß sich Objekte oder Personen unerkannt unmittelbar vor der optoelektronischen Vorrichtung 1 und damit im Gefahrenbereich der Maschine 16 aufhalten könnten, was eine Gefährdung für das Bedienpersonal der Maschine 16 darstellen würde.

Um diese Gefahrenquelle auszuschalten wird bei der erfindungsgemäßen optoelektronischen Vorrichtung 1 zugelassen, daß während des Umschaltvorgangs mehrere Überwachungsbereiche 15 gleichzeitig aktiviert sind. In einer vorteilhaften Ausführungsform der Erfindung wird in der Auswerteeinheit 8 nur eine bestimmte Anzahl N von gleichzeitig aktivierbaren Überwachungsbereichen 15 zugelassen, wobei der zulässige Bereich Nₘᵢₙ≤ N≤ Nₘₐₓ vorzugsweise im Bereich 1≤ N≤ 2 liegt. Dies bedeutet, daß entweder nur die Aktivierung eines Überwachungsbereichs 15 oder maximal die Aktivierung von zwei Überwachungsbereichen 15 zulässig ist. Werden über die an die Auswerteeinheit 8 angeschlossenen Schalter S1 - S4 mehr oder weniger als die zulässige Anzahl von Überwachungsbereichen 15 aktiviert, erfolgt eine Fehlermeldung in der optoelektronischen Vorrichtung 1, worauf beispielsweise die angeschlossene Maschine 16 aus Sicherheitsgründen abgeschaltet wird.

Zudem kann in der Auswerteeinheit 8 überwacht werden, ob die zulässige gleichzeitige Aktivierung mehrerer Überwachungsbereiche 15 eine vorgegebene Sollzeit überschreitet.

Diese Sollzeit ist vorzugsweise applikationspezifisch gewählt und definiert die Maximaldauer, über welche sich der Umschaltvorgang zwischen verschiedenen Überwachungsbereichen 15 erstrecken darf. Wird diese Sollzeit überschritten, so erfolgt ebenfalls eine Fehlermeldung.

Während des Zeitintervalls zwischen t₃ und t₄ des in Figur 5 dargestellten Impulsdiagramms erfolgt die Testung der Schaltungsanordnung gemäß Figur 4. Hierzu wird der Ausgang A der Auswerteeinheit 8 aktiviert. Dadurch wird über die Anordnung der Dioden 41 - 44 auf alle Zuleitungen Z1 - Z4 gleichzeitig der Signalwert 1 ausgegeben, was einer Deaktivierung der Schalter S1 - S4 entspricht. Dabei wird in der Auswerteeinheit 8 geprüft, ob an den Eingängen E1 - E4 die entsprechenden Signalwerte 1 wie in Figur 5 dargestellt, anliegen. Ist dies der Fall, so liegt ein fehlerfreier Betrieb der Schaltungsanordnung vor. Weicht der Signalwert wenigstens einer der Eingänge E1 - E4 von diesen Sollwerten ab, so wird eine Fehlermeldung ausgegeben. Mit dieser Art der Testung ist die Funktionsfähigkeit der Optokoppler 28 - 31, der Widerstände 32 - 35 und der Eingänge E1- E4 der Schaltungsanordnung gemäß Figur 4 abprüfbar. Durch Abprüfen der Bitmuster an den Eingängen E1 - E4 bei einem Wechsel des Überwachungsbereichs können zudem die Funktionen der Schalter S1 - S4 und der Zuleitungen Z1 - Z4 überprüft werden.

## Patentansprüche

1. Optoelektronische Vorrichtung zum Erfassen von Objekten in einem Überwachungsbereich mit einem Distanzsensor, welcher einen Sendelichtstrahlen emittierenden Sender und einen Empfangslichtstrahlen empfangenden Empfänger aufweist, einer Auswerteeinheit zur Auswertung der am Empfänger anstehenden Empfangssignale und einer Ablenkeinheit, an welcher die Sendelichtstrahlen abgelenkt werden, so daß diese periodisch den Überwachungsbereich überstreichen, **dadurch gekennzeichnet, daß** in der Auswerteeinheit (8) die Abmessungen verschiedener Überwachungsbereiche (15) abgespeichert sind, daß mehrere Schalter (S 1 - S4) über jeweils eine Zuleitung (Z1 - Z4) an einen Eingang (E1 - E4) der Auswerteeinheit (8) angeschlossen sind, wobei jedem Eingang (E1 - E4) ein abgespeicherter Überwachungsbereich (15) zugeordnet ist, daß durch Betätigen eines Schalters (S1 - S4) am zugeordneten Eingang (E1 - E4) ein vorgegebener Signalwert zu dessen Aktivierung anlegbar ist, wobei durch den vorgegebenen Signalwert der zugeordnete abgespeicherte Überwachungsbereich (15) aktiviert wird, so daß die Objekte in diesem Überwachungsbereich (15) erfaßt werden, und daß zu Testzwecken über einen Ausgang A der Auswerteeinheit (8) auf die Zuleitungen (Z1 - Z4) jeweils ein vorgegebener Signalwert ausgebbar ist, welcher im fehlerfreien Fall an dem entsprechenden Eingang (E1 - E4) der Auswerteeinheit (8) ansteht.

2. Optoelektronische Vorrichtung nach Anspruch 1, **dadurch gekennzeichnet, daß** die Ausgabe der Signalwerte über den Ausgang A zu Testzwekken zyklisch erfolgt.

3. Optoelektronische Vorrichtung nach Anspruch 1, **dadurch gekennzeichnet, daß** bei auf die Zuleitungen (Z1 - Z4) zu Testzwecken von dem Ausgang A der Auswerteeinheit (8) ausgegebenen Signalwerten die Eingänge (E1 - E4) der Auswerteeinheit (8) im fehlerfreien Fall deaktiviert sind.

4. Optoelektronische Vorrichtung nach einem der Ansprüche 1 - 3, **dadurch gekennzeichnet, daß** eine Fehlermeldung erfolgt, falls bei auf die zu Testzwecken vom Ausgang A der Auswerteeinheit (8) ausgegebenen Signalwerten wenigstens einer der Eingänge (E1 - E4) der Auswerteeinheit (8) aktiviert ist.

5. Optoelektronische Vorrichtung nach einem der Ansprüche 1 - 4, **dadurch gekennzeichnet, daß** zum Wechsel eines Überwachungsbereichs (15) ein nicht betätigter Schalter (S1 - S4) betätigt wird und darauf ein zweiter betätigter Schalter (S 1 - S4) zurückgesetzt wird.

6. Optoelektronische Vorrichtung nach Anspruch 5, **dadurch gekennzeichnet, daß** eine Fehlermeldung erfolgt, falls beide Schalter länger als eine vorgegebene Sollzeit gleichzeitig aktiviert sind.

7. Optoelektronische Vorrichtung nach einem der Ansprüche 1 - 6, **dadurch gekennzeichnet, daß** gleichzeitig eine vorgegebene Anzahl N von Schaltern betätigt ist, so daß eine Erfassung von Objekten in N verschiedenen Überwachungsbereichen (15) erfolgt.

8. Optoelektronische Vorrichtung nach Anspruch 7, **dadurch gekennzeichnet, daß** die vorgegebene Anzahl N von gleichzeitig betätigbaren Schaltern in einem Bereich Nₘᵢₙ ≤ N ≤ Nₘₐₓ liegt, und daß bei gleichzeitigem Betätigen von N Schaltern außerhalb dieses Bereichs eine Fehlermeldung erfolgt.

9. Optoelektronische Vorrichtung nach Anspruch 8, **dadurch gekennzeichnet, daß** als Bereich gleichzeitig betätigbarer Schalter Nₘᵢₙ = 1 und Nₘₐₓ = 2 gewählt ist.

10. Optoelektronische Vorrichtung nach einem der Ansprüche 1 - 9, **dadurch gekennzeichnet, daß** vier Schalter (S1 - S4) an die Auswerteeinheit (8) angeschlossen sind.

11. Optoelektronische Vorrichtung nach einem der Ansprüche 1 - 10, **dadurch gekennzeichnet, daß** die Schalter (S1 - S4) von Relais oder von Ausgängen einer Steuerung gebildet sind.

12. Optoelektronische Vorrichtung nach einem der Ansprüche 1 - 11, **dadurch gekennzeichnet, daß** die Schalter (S1 - S4) von binären Sensoren, insbesondere Lichtschranken oder Näherungsschaltern, gebildet sind.

13. Optoelektronische Vorrichtung nach einem der Ansprüche 1 - 12, **dadurch gekennzeichnet, daß** bei einem betätigten Schalter (S 1 - S4) auf der entsprechenden Zuleitung (Z1 - Z4) eine Versorgungsspannung VCC anliegt.

14. Optoelektronische Vorrichtung nach Anspruch 13, **dadurch gekennzeichnet, daß** die Versorgungsspannung innerhalb eines Bereichs von 16 V bis 30V variiert.

15. Optoelektronische Vorrichtung nach einem der Ansprüche 13 oder 14, **dadurch gekennzeichnet, daß** an die Zuleitungen (Z1 - Z4) unidirektionale Supressor-Dioden (36, 37, 38, 39) zum Schutz gegen transiente Überspannungen angeschlossen sind.

16. Optoelektronische Vorrichtung nach einem der Ansprüche 13 - 15, **dadurch gekennzeichnet, daß** bei einem betätigten Schalter (S1 - S4) der zugeordnete Eingang (E1 - E4) der Auswerteeinheit (8) den Signalwert "0" einnimmt und bei nicht betätigtem Schalter (S1 - S4) den Signalzustand "1" einnimmt.

17. Optoelektronische Vorrichtung nach einem der Ansprüche 1 - 16, **dadurch gekennzeichnet, daß** die vom Ausgang A der Auswerteeinheit (8) zu Testzwecken ausgegebenen Signalwerte jeweils gleichzeitig über eine Anordnung von Dioden (41, 42 ,43, 44) auf die Zuleitungen (Z1 - Z4) ausgebbar sind.

18. Optoelektronische Vorrichtung nach einem der Ansprüche 1 - 17, **dadurch gekennzeichnet, daß** die Eingänge (E1 - E4) und der Ausgang A der Auswerteeinheit (8) über Optokoppler (28, 29, 30, 31, 40) von den angeschlossenen Schaltern (S1 - S4) galvanisch getrennt sind.

19. Optoelektronische Vorrichtung nach einem der Ansprüche 1 - 18, **dadurch gekennzeichnet, daß** die Auswerteeinheit (8) von einem Mikrocontroller gebildet ist.

## Claims

1. Optoelectronic device for detecting objects in a monitoring region by a distance sensor, which comprises a transmitter emitting transmitted light beams and a receiver receiving received light beams, an evaluating unit for evaluation of the received signals present at the receiver and a deflecting unit at which the transmitted light beams are deflected so that these periodically scan the monitoring region, **characterised in that** the dimensions of different monitoring regions (15) are stored in the evaluating unit (8), that several switches (S1 - S4) are each connected by way of a respective feed line (Z1 - Z4) to an input (E1 - E4) of the evaluating unit (8), wherein a stored monitoring region (15) is associated with each input (E1 - E4), that through actuation of a switch (S1 - S4) a predetermined signal value can be applied to the associated input (E1 - E4) for activation thereof, wherein the associated stored monitoring region (15) is activated by the predetermined signal value so that the objects in this monitoring region (15) are detected, and that for test purposes a respective predetermined signal value can be delivered by way of an output A of the evaluating unit (8) to the feed lines (Z1 - Z4) and in the fault-free case is present at the corresponding input (E1 - E4) of the evaluating unit (8).

2. Optoelectronic device according to claim 1, **characterised in that** the delivery of the signal values by way of the output A for testing purposes takes place cyclically.

3. Optoelectronic device according to claim 1, **characterised in that** when signal values are delivered on the feed lines (Z1 - Z4) from the output A of the evaluating unit (8) for test purposes the inputs (E1 - E4) of the evaluating unit (8) are deactivated in the fault-free case.

4. Optoelectronic device according to one of claims 1 to 3, **characterised in that** a fault report takes place if at least one of the inputs (E1 - E4) of the evaluating unit (8) is activated in response to the signal values delivered from the output A of the evaluating unit (8) for test purposes.

5. Optoelectronic device according to one of claims 1 to 4, **characterised in that** a non-actuated switch (S1 - S4) is actuated for change of a monitoring region (15) and a second actuated switch (S1 - S4) is thereupon reset.

6. Optoelectronic device according to claim 5, **characterised in that** a fault report takes place if both switches are simultaneously activated longer than a predetermined target time.

7. Optoelectronic device according to one of claims 1 to 6, **characterised in that** a predetermined number N of switches is actuated simultaneously so that a detection of objects in N different monitoring regions (15) takes place.

8. Optoelectronic device according to claim 7, **characterised in that** the predetermined number N of simultaneously actuable switches lies in the region Nₘᵢₙ ≤ N ≤ Nₘₐₓ and that an error report takes place in the case of simultaneous actuation of N switches outside this region.

9. Optoelectronic device according to claim 8, **characterised in that** simultaneously actuable switches Nₘᵢₙ = 1 and Nₘₐₓ = 2 are selected as region.

10. Optoelectronic device according to one of claims 1 to 9, **characterised in that** four switches (S1 - S4) are connected with the evaluating unit (8).

11. Optoelectronic device according to one of claims 1 to 10, **characterised in that** the switches (S1 - S4) are formed by relays or outputs of a control.

12. Optoelectronic device according to one of claims 1 to 11, **characterised in that** the switches (S1 - S4) are formed by binary sensors, particularly light barriers or proximity switches.

13. Optoelectronic device according to one of claims 1 to 12, **characterised in that** when a switch (S1 - S4) is actuated a supply voltage VCC is applied to the corresponding feed line (Z1 - Z4).

14. Optoelectronic device according to claim 13, **characterised in that** the supply voltage varies within a range of 16 V to 30 V.

15. Optoelectronic device according to one of claims 13 and 14, **characterised in that** unidirectional suppressor diodes (36, 37, 38, 39) for protection against transient excess voltages are connected with the feed lines (Z1 - Z4).

16. Optoelectronic device according to one of claims 13 to 15, **characterised in that** when a switch (S1 - S4) is actuated the associated input (E1 - E4) of the evaluating unit (8) adopts the signal value "0" and when the switch (S1 - S4) is not actuated adopts the signal state "1".

17. Optoelectronic device according to one of claims 1 to 16, **characterised in that** the signal values delivered from the output A of the evaluating unit (8) for test purposes can be respectively delivered simultaneously by way of an arrangement of diodes (41, 42, 43, 44) to the feed lines (Z1 - Z4).

18. Optoelectronic device according to one of claims 1 to 17, **characterised in that** the inputs (E1 - E4) and the output A of the evaluating unit (8) are electrically separated from the connected switches (S1 - S4) by way of optocouplers (28, 29, 30, 31, 40).

19. Optoelectronic device according to one of claims 1 to 18, **characterised in that** the evaluating unit (8) is formed by a microcontroller.

## Revendications

1. Dispositif optoélectronique servant à détecter des objets dans une zone à surveiller à l'aide d'un capteur de distance, lequel présente un émetteur émettant des rayons lumineux d'émission et un récepteur recevant des rayons lumineux de réception, une unité d'évaluation pour évaluer les signaux de réception présents au récepteur et une unité de déviation sur laquelle les rayons lumineux d'émission sont déviés de façon à balayer périodiquement la zone à surveiller, **caractérisé en ce que** les dimensions de différentes zones à surveiller (15) sont mémorisées dans l'unité d'évaluation (8), que plusieurs commutateurs (S1 - S4) sont reliés chacun par une ligne (Z1 - Z4) à une entrée (E1 - E4) de l'unité d'évaluation (8), une zone à surveiller (15) mémorisée étant associée à chaque entrée (E1 - E4), qu'en actionnant un commutateur (S1 - S4) à l'entrée (E1 - E4) associée on peut appliquer une valeur de signal prédéfinie pour son activation, la zone à surveiller (15) mémorisée associée étant activée par la valeur de signal prédéfinie de façon que les objets situés dans cette zone à surveiller (15) soient détectés, et qu'il est possible, dans un but de test, d'émettre par une sortie A de l'unité d'évaluation (8), sur chacune des lignes (Z1 - Z4), une valeur de signal prédéfinie qui, dans le cas sans défaut, est présente à l'entrée (E1 - E4) correspondante de l'unité d'évaluation (8).

2. Dispositif optoélectronique selon la revendication 1, **caractérisé en ce que**, dans un but de test, l'émission des valeurs de signal par la sortie A a lieu de façon cyclique.

3. Dispositif optoélectronique selon la revendication 1, **caractérisé en ce que** lorsque des valeurs de signal sont émises dans un but de test sur les lignes (Z1 - Z4) par la sortie A de l'unité d'évaluation (8), les entrées (E1 - E4) de l'unité d'évaluation (8) sont désactivées dans le cas sans défaut.

4. Dispositif optoélectronique selon l'une des revendications 1 à 3, **caractérisé en ce qu'**un défaut est signalé si, lorsque des valeurs de signal sont émises dans un but de test par la sortie A de l'unité d'évaluation (8), au moins une des entrées (E1 - E4) de l'unité d'évaluation (8) est activée.

5. Dispositif optoélectronique selon l'une des revendications 1 à 4, **caractérisé en ce que** pour changer de zone à surveiller (15), un commutateur (S1 - S4) non actionné est actionné et ensuite un deuxième commutateur (S1 - S4) actionné est remis à zéro.

6. Dispositif optoélectronique selon la revendication 5, **caractérisé en ce qu'**un défaut est signalé si deux commutateurs sont activés en même temps plus longtemps qu'une durée de consigne prédéfinie.

7. Dispositif optoélectronique selon l'une des revendications 1 à 6, **caractérisé en ce qu'**un nombre N prédéfini de commutateurs est actionné en même temps de façon qu'une détection d'objets ait lieu dans N zones à surveiller (15) différentes.

8. Dispositif optoélectronique selon la revendication 7, **caractérisé en ce que** le nombre N prédéfini de commutateurs actionnables en même temps se situe dans une plage Nₘᵢₙ≤ N ≤ Nₘₐₓ, et qu'un défaut est signalé en cas d'actionnement simultané de N commutateurs en dehors de cette plage.

9. Dispositif optoélectronique selon la revendication 8, **caractérisé en ce que** l'on choisit Nₘᵢₙ = 1 et Nₘₐₓ= 2 comme plage de commutateurs actionnables en même temps.

10. Dispositif optoélectronique selon l'une des revendications 1 à 9, **caractérisé en ce que** quatre commutateurs (S1 - S4) sont reliés à l'unité d'évaluation (8).

11. Dispositif optoélectronique selon l'une des revendications 1 à 10, **caractérisé en ce que** les commutateurs (S1 - S4) sont formés de relais ou de sorties d'une commande.

12. Dispositif optoélectronique selon l'une des revendications 1 à 11, **caractérisé en ce que** les commutateurs (S1 - S4) sont formés de capteurs binaires, en particulier de barrières optiques ou de détecteurs de proximité.

13. Dispositif optoélectronique selon l'une des revendications 1 à 12, **caractérisé en ce qu'**une tension d'alimentation VCC est appliquée sur la ligne (Z1 - Z4) correspondante quand un commutateur (S1 - S4) est actionné.

14. Dispositif optoélectronique selon la revendication 13, **caractérisé en ce que** la tension d'alimentation varie à l'intérieur d'une plage comprise entre 16 V et 30 V.

15. Dispositif optoélectronique selon l'une des revendications 13 ou 14, **caractérisé en ce que** des diodes suppresseuses unidirectionnelles (36, 37, 38, 39) sont reliées aux lignes (Z1 - Z4) pour la protection contre les surtensions transitoires.

16. Dispositif optoélectronique selon l'une des revendications 13 à 15, **caractérisé en ce que** lorsqu'un commutateur (S1 - S4) est actionné, l'entrée (E1 - E4) associée de l'unité d'évaluation (8) prend la valeur de signal « 0 » et lorsque le commutateur (S1 - S4) n'est pas actionné la valeur de signal « 1 ».

17. Dispositif optoélectronique selon l'une des revendications 1 à 16, **caractérisé en ce que** les valeurs de signal émises dans un but de test par la sortie A de l'unité d'évaluation (8) peuvent être émises en même temps sur les lignes (Z1 - Z4) par l'intermédiaire d'un agencement de diodes (41, 42, 43, 44).

18. Dispositif optoélectronique selon l'une des revendications 1 à 17, **caractérisé en ce que** les entrées (E1 - E4) et la sortie A de l'unité d'évaluation (8) sont séparées galvaniquement des commutateurs (S1 - S4) par des optocoupleurs (28, 29, 30, 31, 40).

19. Dispositif optoélectronique selon l'une des revendications 1 à 18, **caractérisé en ce que** l'unité d'évaluation (8) est formée par un microcontrôleur.
